# NEW EUROPEAN PATENT SPECIFICATION

(11) **EP 0 753 249 B2**
(45) Date of publication and mention of the opposition decision: **12.03.2003**
(45) Mention of the grant of the patent: 23.12.1998
(21) Application number: 96201820.6
(22) Date of filing: 01.07.1996
(51) Int. Cl.: A01K 1/12

(54) **A method of milking animals**
Verfahren zum Melken von Tieren
Procédé pour la traite des animaux

(30) Priority: 12.07.1995 NL 1000782
(43) Date of publication of application: 15.01.1997
(73) Proprietor: MAASLAND N.V., 3155 PD Maasland (NL)
(72) Inventor: Van den Berg, Karel, 2971 BR Bleskensgraaf (NL)
(74) Representative: Corten, Maurice Jean F.M.

(56) References cited:
- EP-A- 0 091 892
- EP-A- 0 566 201
- EP-A- 0 567 191
- AU-A- 2 635 684
- DD-C- 118 504
- DE-A- 2 615 253
- DE-C- 3 804 970
- FR-A- 2 621 345
- GB-A- 1 372 355
- SE-B- 453 955
- SU-A- 1 613 067
- US-A- 3 460 515
- Artmann, R.;Konzepte und Entwickelungen zur Automatisierung des Melkens; VDI Fachgruppe Landtechnil; Heft 9, pp 45-69, 1990
- Bottema, J.;Automatic Milking: reality; Prospects for automatic milking; Pudoc Scientific Publishers; pp 63-71, 1992

## Description

The present invention relates to a method of milking animals, such as cows, in a milk box in which a milking robot is arranged, whereby a system of fences, gates, doors, or similar means is set up in such a way that from a first point in time (t₁) animals can go freely from a first area (A) to the milk box in order to be milked there and are guided back from there to the said area (A), that afterwards from a second point of time (t₂) animals can go freely from the first area (A) to the milk box in order to be milked there and are guided from there to a second area (B) and that afterwards animals still being present in the first area (A) at a third point of time (t₃) are driven to the milk box in order to be milked there and are guided from there to the second area (B). It is known that, when using a milking robot, it is possible to train the animals in going, of their own free will, in time to the milk box in order to be milked there. In practice, however, this appears not always to apply for all the animals. There are animals letting pass too much time prior to going to the milk box or not even being willing to go there at all. From document EP-A-0 566 201 there is known a method and means for milking animals in a milk box in which a milking robot is arranged, whereby a system of fences, gates, doors, or similar means is set up in such a way that from a first point in time animals can go freely from a first area to the milk box in order to be milked and are guided from there to a second area and that afterwards animals still being present in the first area they are driven to the milk box in order to be milked there and are guided from there to said second area. The method according to the invention has the advantage that when e.g. the first area is constituted by a meadow the animals, after being milked, are guided back to the meadow so that they have enough time for grazing.

The procedure proposed here might be connected with a procedure in the opposite direction; this implies that the invention then also relates to a method characterized in that the system of fences, gates, doors, or similar means is set up in such a way that, from the (fourth) point of time (t₄) when the last animal has entered the milk box from the first area (A), animals from the second area (B) can go freely to the milk box in order to be milked there and be guided back from there to the said area (B), that afterwards from a fifth point of time (t₅) animals from the second area (B) can go freely to the milk box in order to be milked there and be guided from there to the first area (A) and that then animals still being present in the second area (B) at a sixth point of time (t₆) are driven to the milk box in order to be milked there and are guided from there to the first area (A). In this way, the situation at the first point of time has been reached when the latter animals have been milked. The cycle from the first point of time (t₁) until the next first point of time (t₇) preferably corresponds to approximately 24 hours. This implies that the animals can regularly be driven from the first area (A), or the second area (B) to the milk box.

As, due to the availability of the milking robot in the milk box, the procedure will pass off entirely automatically, also the system of fences, gates, doors, or similar means will be computer-controlled. This is of special advantage if the computer-controlled system will comprise a milking robot.

As mentioned, a number of animals will have to be driven to the milk box. Although this driving can be done by the farmer, the animals should preferably be driven to the milk box by means of movable fencing means in the relevant areas. These movable fencing means will preferably be computer-controlled as well.

The present invention further relates to a construction for milking animals, such as cows, comprising a milk box (7) with a milking robot (10), a computer (12), two separate areas (A, B) and a system of computer-controlled fences, gates, doors, or similar means (1 - 6, 8, 9) via which both areas (A, B) can communicate with the milk box (7), characterized in that the computer is programmed in such a way that the method according to any one of the claims 1 - 6 can be applied.

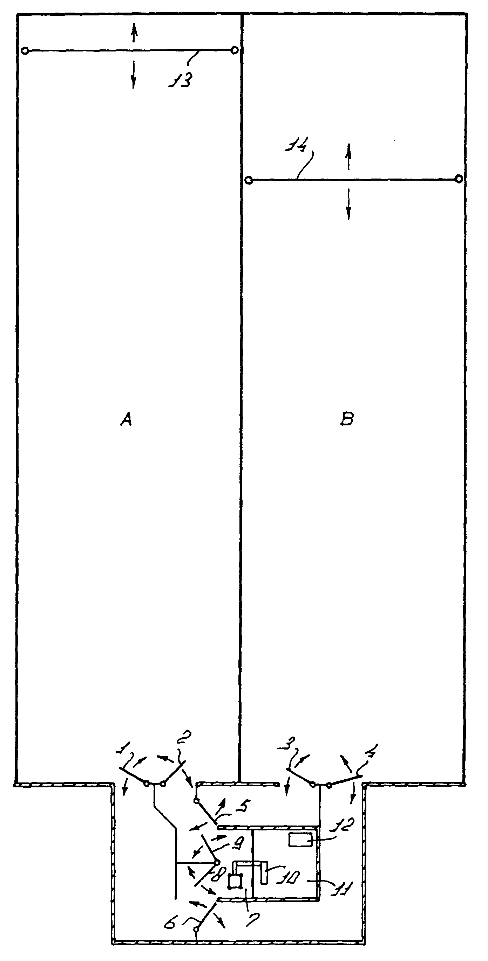

For a better understanding of the invention and to show how the same may be carried into effect, reference will now be made, by way of example, to the accompanying drawing, in which the arrangement of a milking robot relative to a couple of areas A and B is shown schematically.

Both areas A and B may be a part of an open loose house in which cows can walk freely. Areas A and B might be a part of a meadow or of another place where cows might dwell. Via a system of doors 1 to 6, both areas communicate with a milk box 7 having an entrance door 8 and an exit door 9. In the milk box there is arranged a milking robot 10. In the area 11 being adjacent to the milk box 7 there is arranged a computer 12 for the purpose of controlling the milking robot 10, the doors 1 to 6, 8 and 9 and further all the operations required for automatically milking. In the areas A and B there are provided movable fencings 13 and 14. These fencings, that may be constituted e.g. by a live wire, can be moved in the way shown in the drawing from the top to the bottom of the page and in the opposite direction. In particular, the two movable fencings 13 and 14 may be fixed at both their ends to a construction supported by wheels, said construction being adapted to move through the two areas under control of the computer 12. By moving the fencings 13 and 14, the animals being present in these areas can be driven in the direction of the milk box 7. In case it is difficult to provide such movable fencings 13 and 14, it will of course be possible for the farmer to drive the animals himself in the direction of the milk box 7. By controlling the doors 1 to 6 in a proper way, the driving of animals to be effected by the farmer will be facilitated to a considerable extent.

The starting point is the situation in which all the animals are in the first area A and, at a first point of time t₁, the doors 1 and 2 are opened, the doors 3 and 4 are closed and the doors 5 and 6 are in the shown position. In the latter situation, the animals can go freely from the area A to the milk box 7 in order to be milked there. As long as there is no animal present in the milk box 7, the . entrance door 8 thereof is open. The exit door 9 of the milk box is only opened to allow an animal to leave the milk box and is closed immediately afterwards. When an animal has been milked, it will return of its own accord . to the area A. The situation changes at a second point of time t₂: while the door 1 remains open, the door 2 is closed and the door 3 is opened; the door 4 remains closed, the door 5 is brought in the non-shown position, while the door 6 is maintained in the shown position. Now the animals can go freely from the area A to the milk box 7 in order to be milked there and to be guided from there to the area B. When afterwards, at a third point of time t₃, it appears that in the area A there are still animals which, obviously, have not been milked in the time t₃ - t₂, then these animals are driven, either by the farmer or by means of the movable fencings 13 and 14, to the milk box 7, are milked and guided to the area B. As soon as the last animal has entered the milk box 7 from the area A and all the other animals are in the area B, the door 1 is closed, while the door 3 remains closed, the door 4 is opened, while the door 3 is kept open and the door 6 is brought in the non-shown position, while the door 5 is maintained in the non-shown position. Now, at a fourth point of time (t₄), the animals can go freely from the area B to the milk box 7 in order to be milked there and return from there to the area B. The situation changes again at a fifth point of time t5: the door 2 is opened, while the door 1 is kept closed, the door 3 is closed, while the door 4 is kept open and the door 5 is brought in the shown position, while the door 6 is maintained in the non-shown position. Then the animals can go freely from the area B to the milk box 7 in order to be milked there and be guided from there to the area A. When then, at a sixth point of time t₆, it appears that in the area B there are still animals which, obviously, have not been milked in the time t₆ - t₅, then these animals are again driven to the milk box, are milked and guided to the area A. Then, at a seventh point of time (t₇), the doors 1 to 6 can be reset in their initial position, i.e. in their position prevailing at the point of time t₁.

When the point of time t₁ is chosen e.g. around eight o'clock in the morning, the point of time t₄ around eight o'clock in the evening and the point of time t₇ again around eight o'clock in the morning, then, twice per 24 hours, i.e. in the morning and in the evening, at the most a few animals will have to be driven from an area to the milk box in order to be milked. These animals will no longer have to be separated from the herd. The points of time t₂ and t₅ can be attuned to the size of the herd and will be somewhere between six and ten hours after the relevant points of time t₁ and t₄.

## Claims

1. A method of milking animals, such as cows, in a milk box (7) in which a milking robot (10) is arranged, whereby a system of fences, gates, doors, or similar means is set up in such a way that from a first point of time (t₁) animals can go freely from a first area (A) to the milk box (7) in order to be milked there and are guided back from there to the said area (A), that afterwards from a second point of time (t₂) animals can go freely from the first area (A) to the milk box (7) in order to be milked there and are guided from there to a second area (B) and that afterwards animals still being present in the first area (A) at a third point of time (t₃) are driven to the milk box (7) in order to be milked there and are guided from there to the second area (B).

2. A method as claimed in claim 1, **characterized in that** the system of fences, gates, doors, or similar means is set up in such a way that from the (fourth) point of time (t₄) when the last animal has entered the milk box (7) from the first area (A), animals from the second area (B) can go freely to the milk box in order to be milked there and are guided back from there to the said area (B), that afterwards from a fifth point of time (t₅) animals from the second area (B) can go freely to the milk box (7) in order to be milked there and are guided from there to the first area (A) and that then animals still being present in the second area (B) at a sixth point of time (t₆) are driven to the milk box (7) in order to be milked there and are guided from there to the first area (A).

3. A method as claimed in claim 2, **characterized in that** the cycle from the first point of time (t₁) until the next first point of time (t₇) the animals can go freely from the first area (A) to the milk box (7) corresponds to approximately 24 hours.

4. A method as claimed in any one of the preceding claims, **characterized in that** the system of fences, gates, doors, or similar means is computer-controlled.

5. A method as claimed in any one of the preceding claims, **characterized in that** by means of a movable fencing (13,14) the animals can be driven to a milk box (7).

6. A method as claimed in claim 5, **characterized in that** the movable fencing (13,14) is computer-controlled.

7. A construction for milking animals, such as cows, comprising a milk box (7) with a milking robot (10), a computer (12), two separate areas (A, B) and a system of computer-controlled fences, gates, doors, or similar means (1 - 6, 8, 9) via which both areas (A, B) can communicate with the milk box (7), **characterized in that** the computer works such that the method according to any one of the claims 1 - 6 can be applied.

8. A construction as claimed in claim 7, **characterized in that** computer-controlled drive means are provided to drive animals to the milk box (7).

9. A construction as claimed in claim 8, **characterized in that** the drive means are constituted by movable fencings (13, 14).

10. A construction as claimed in any one of the preceding claims 7 to 9, **characterized in that** the construction comprises a system whereby the cows are automatically milked and whereby the cows are driven to the automatic milking robot (10) by electronic means.

11. A construction as claimed in any one of the preceding claims 7-10, **characterized in that** the construction comprises movable means whereby the cows will go through the milking robot (10) at adjustable points of time.

## Patentansprüche

1. Verfahren zum Melken von Tieren, wie z. B. Kühen, in einer Melkbox (7) mit darin angeordnetem Melkroboter (10), wobei ein System von Zäunen, Toren, Türen oder ähnlichen Einrichtungen derart angeordnet ist, daß zu einem ersten Zeitpunkt (t1) Tiere ungehindert aus einem ersten Bereich (A) zur Melkbox (7) gehen können, um dort gemolken zu werden, und von dort in den Bereich (A) zurückgeleitet werden, daß anschließend zu einem zweiten Zeitpunkt (t2) Tiere ungehindert aus dem ersten Bereich (A) zur Melkbox (7) gehen können, um dort gemolken zu werden, und von dort in einen zweiten Bereich (B) geleitet werden, und daß anschließend Tiere, die sich zu einem dritten Zeitpunkt (t3) noch im ersten Bereich (A) aufhalten, zur Melkbox (7) getrieben werden, um dort gemolken und von dort in den zweiten Bereich (B) geleitet zu werden.

2. Verfahren nach Anspruch 1,
**dadurch gekennzeichnet, daß** das System von Zäunen, Toren, Türen oder ähnlichen Einrichtungen derart angeordnet ist, daß zu dem (vierten) Zeitpunkt (t4), zu dem das letzte Tier aus dem ersten Bereich (A) die Melkbox (7) betreten hat, Tiere aus dem zweiten Bereich (B) ungehindert zur Melkbox gehen können, um dort gemolken zu werden, und von dort in den Bereich (B) zurückgeleitet werden, daß anschließend zu einem fünften Zeitpunkt (t5) Tiere aus dem zweiten Bereich (B) ungehindert zur Melkbox (7) gehen können, um dort gemolken zu werden, und von dort in den ersten Bereich (A) geleitet werden, und daß dann Tiere, die sich noch in dem zweiten Bereich (B) aufhalten, zu einem sechsten Zeitpunkt (t6) zur Melkbox (7) getrieben werden, um dort gemolken zu werden, und von dort in den ersten Bereich (A) geleitet werden.

3. Verfahren nach Anspruch 2,
**dadurch gekennzeichnet, daß** der Zyklus zwischen dem ersten Zeitpunkt (t1) bis zum nächsten ersten Zeitpunkt (t7), zu dem die Tiere ungehindert aus dem ersten Bereich (A) zur Melkbox (7) gehen können, etwa 24 Stunden entspricht.

4. Verfahren nach einem der vorhergehenden Ansprüche,
**dadurch gekennzeichnet, daß** das System von Zäunen, Toren, Türen oder ähnlichen Einrichtungen rechnergesteuert ist.

5. Verfahren nach einem der vorhergehenden Ansprüche,
**dadurch gekennzeichnet, daß** die Tiere mittels eines beweglichen Zaunes (13, 14) zu einer Melkbox (7) zu treiben sind.

6. Verfahren nach Anspruch 5,
**dadurch gekennzeichnet, daß** der bewegliche Zaun (13, 14) rechnergesteuert ist.

7. Vorrichtung zum Melken von Tieren, wie z. B. Kühen, bestehend aus einer Melkbox (7) mit einem Melkroboter (10), einem Computer (12), zwei getrennten Bereichen (A, B) und einem System von rechnergesteuerten Zäunen, Toren, Türen oder ähnlichen Einrichtungen (1 bis 6, 8, 9), über die beide Bereiche (A, B) mit der Melkbox (7) verbunden sind,
**dadurch gekennzeichnet, daß** der Computer derart arbeitet, daß das Verfahren nach einem der Ansprüche 1 bis 6 durchführbar ist.

8. Vorrichtung nach Anspruch 7,
**dadurch gekennzeichnet, daß** eine rechnergesteuerte Treibvorrichtung vorhanden ist, um die Tiere zur Melkbox (7) zu treiben.

9. Vorrichtung nach Anspruch 8,
**dadurch gekennzeichnet, daß** die Treibvorrichtung durch bewegliche Zäune (13, 14) gebildet ist.

10. Vorrichtung nach einem der Ansprüche 7 bis 9,
**dadurch gekennzeichnet, daß** die Vorrichtung ein System umfaßt, durch das die Kühe automatisch gemolken und durch elektronische Einrichtungen zu dem automatischen Melkroboter (10) getrieben werden.

11. Vorrichtung nach einem der Ansprüche 7 bis 10,
**dadurch gekennzeichnet, daß** die Vorrichtung bewegliche Einrichtungen umfaßt, wobei die Kühe den Melkroboter (10) zu einstellbaren Zeitpunkten durchlaufen.

## Revendications

1. Procédé de traite d'animaux, tels que des vaches, dans une stalle de traite (7) dans laquelle est disposé un robot trayeur (10), tandis qu'un système de barrières, de clôtures, de portes ou de moyens similaires, est aménagé de telle manière qu'à partir d'un premier instant (t1), des animaux peuvent aller librement d'une première zone (A) à la stalle de traite (7) pour y être traits et, de là, sont guidés pour revenir à ladite zone (A), et, qu'ensuite, à partir d'un deuxième instant (t2), les animaux peuvent aller librement de la première zone (A) à la stalle de traite pour y être traits et, de là, sont guidés jusqu'à une deuxième zone (B) et qu'ensuite les animaux étant encore présents dans la première zone (A) à une troisième instant (t3) sont conduits à la stalle de traite (7) pour y être traits et, de là, sont guidés jusqu'à la deuxième zone (B).

2. Procédé selon la revendication 1, **caractérisé en ce que** le système de barrières, de clôtures, de portes ou de moyens similaires est aménagé de telle manière qu'à partir du quatrième instant (t4), quand le dernier animal est entré dans la stalle de traite (7) en venant de la première zone (A), les animaux de la deuxième zone (B)° peuvent aller librement à la stalle de traite pour y être traits et, de là, sont guidés pour revenir à ladite zone (B), qu'ensuite à partir d'un cinquième instant (t5), les animaux venant de la deuxième zone (B) peuvent aller librement à la stalle de traite (7) pour y être traits et, de là, sont guidés jusqu'à la premième zone (A) et qu'alors les animaux étant encore présents dans la deuxième zone (B) à un sixième instant (t6) sont conduits à la stalle de traite (7) pour y être traits et, de là, sont guidés jusqu'à la première zone (A).

3. Procédé selon la revendication 2, **caractérisé en ce que** le cycle à partir du premier instant (t1) jusqu'au premier instant (t7) suivant, où les animaux peuvent aller librement de la première zone (A) à la stalle de traite (7), correspond à approximativement 24 heures.

4. Procédé selon l'une quelconque des revendications précédentes, **caractérisé en ce que** le système de barrières, de clôtures, de portes ou de moyens similaires est commandé par ordinateur.

5. Procédé selon l'une quelconque des revendications précédentes, **caractérisé en ce qu'**au moyen d'une clôture mobile (13, 14) les animaux peuvent être conduits à une stalle de traite (7).

6. Procédé selon la revendication 5, **caractérisé en ce que** la clôture mobile (13, 14) est commandée par ordinateur.

7. Dispositif de traite d'animaux, tels que des vaches, comprenant une stalle de traite (7) avec un robot trayeur (10), un ordinateur (12), deux zones séparées (A, B) et un système de barrières, de clôtures, de portes ou de moyens similaires (1-6, 8, 9) commandés par ordinateur, par l'intermédiaire desquels les deux zones (A, B) peuvent communiquer avec la stalle de traite (7), **caractérisé en ce que** l'ordinateur opère de telle sorte que le procédé selon l'une quelconque des revendications 1 à 6 peut être appliqué.

8. Dispositif selon la revendication 7, **caractérisé en ce que** des moyens d'entraînement commandés par ordinateur sont prévus pour conduire les animaux à la stalle de traite (7).

9. Dispositif selon la revendication 8, **caractérisé en ce que** les moyens d'entraînement sont constitués par des clôtures mobiles (13, 14).

10. Dispositif selon l'une quelconque des revendications précédentes 7 à 9, **caractérisé en ce que** le dispositif comprend un système au moyen duquel les vaches sont traites automatiquement et dans lequel les vaches sont conduites au robot trayeur automatique (10) par des moyens électroniques.

11. Dispositif selon l'une quelconque des revendications précédentes 7 à 10, **caractérisé en ce que** le dispositif comprend des moyens mobiles au moyen desquels les vaches parviendront au robot trayeur (10) à des instants réglables.
